# EUROPÄISCHE PATENTSCHRIFT

(11) **EP 0 905 623 B1**
(45) Veröffentlichungstag und Bekanntmachung des Hinweises auf die Patenterteilung: **21.12.2005**
(21) Anmeldenummer: 98440198.4
(22) Anmeldetag: 07.09.1998
(51) Int. Cl.: G06F 11/16, G06F 11/18, G06F 11/00

(54) **Verfahren zum Austausch von Datenpaketen innerhalb eines sicheren Mehrrechnersystems und Mehrrechnersystem zur Ausführung des Verfahrens**
Method for exchanging data packets in a safe multicomputer system and multicomputer system for carrying out the same
Méthode pour l'échange de packets de données dans un système sécurisé de multiordinateur et multiordinateur mettant la méthode en oeuvre

(30) Priorität: 29.09.1997 DE 19742918
(43) Veröffentlichungstag der Anmeldung: 31.03.1999
(73) Patentinhaber: ALCATEL, 75008 Paris (FR)
(72) Erfinder: Kantz, Heinz, 1230 Wien (AT); Scheck, Oliver, 1220 Wien (AT); Metzner, Peter, 1160 Wien (AT)
(74) Vertreter: Schätzle, Albin

(56) Entgegenhaltungen:
- EP-A- 0 246 218
- US-A- 5 506 962
- KOPETZ H ET AL: "TTP - A PROTOCOL FOR FAULT-TOLERANT REAL-TIME SYSTEMS" COMPUTER, Bd. 27, Nr. 1, 1. Januar 1994, Seiten 14-23, XP000426338
- SURI N ET AL: "SYNCHRONIZATION ISSUES IN REAL-TIME SYSTEMS" PROCEEDINGS OF THE IEEE, Bd. 82, Nr. 1, 1. Januar 1994, Seiten 41-53, XP000435880

## Beschreibung

Die Erfindung betrifft ein Verfahren zum Austausch von Datenpaketen innerhalb eines sicheren Mehrrechnersystems. Die Erfindung betrifft ferner ein sicheres Mehrrechnersystem zur Ausführung des Verfahrens.

Zur Steuerung und Überwachung sicherheitskritischer Systeme, etwa im Bereich der Eisenbahnsignaltechnik oder der Luft- und Weltraumfahrt, werden in der Regel Mehrrechnersysteme eingesetzt. Solche Mehrrechnersysteme bestehen aus wenigstens zwei Rechnern, die anstehende Aufgaben weitgehend parallel und unabhängig voneinander abarbeiten. Die Rechner der meisten Mehrrechnersysteme teilen ihre Ergebnisse einem systeminternen oder - externen Vergleicher mit, der eine Majoritätsentscheidung herbeiführt. Der Vergleicher stellt sicher, daß nur solche Ergebnisse akzeptiert werden, die von der Mehrzahl der beteiligten Rechner übereinstimmend ermittelt worden sind. Ein von nur einem Rechner ermitteltes Ergebnis kann somit niemals auf den zu steuernden Prozeß einwirken, da ein Rechner in einem Mehrrechnersystem unter keinen Umständen die Mehrheit haben kann. Häufig sind derartige Mehrrechnersysteme als 2-aus-3-Rechnersysteme ausgeführt, bei denen das Übereinstimmen der Ergebnisse von wenigstens zwei Rechnern verlangt wird. Ein Ausfallen eines der drei Rechner wird vom System toleriert, da dann noch immer zwei Rechner übereinstimmende Ergebnisse ermitteln können.

Da, wie eingangs bereits erwähnt, die Rechner in derartigen Mehrrechnersystemen anstehende Aufgaben weitgehend parallel abarbeiten, muß dafür gesorgt werden, daß allen Rechner auch derselbe Datenstrom zugeführt wird. Wenn etwa einer der Rechner Datenpakete in der Reihenfolge a → b → c und ein anderer Rechner in der Reihenfolge a → c → b erhält, so werden die Rechner in der Regel bei ihren Berechnungen trotz gleicher Programmierung zu unterschiedlichen Ergebnissen kommen, obwohl sie an sich fehlerfrei arbeiten. Ein 2-aus-2-Rechnersystem wird durch einen derartigen Fehler unfähig, ein Ergebnis auszugeben. Das Auftreten eines weiteren Fehlers kann bereits dazu führen, daß zwei nicht korrekte Ergebnisse übereinstimmen und somit vom Vergleicher als "richtig" anerkannt werden. Katastrophale Folgen wie Zugunglücke und Flugzeugabstürze sind dann nicht auszuschließen.

Bekannt sind Mehrrechnersysteme, die nach einem festen, systemeinheitlichen Synchronisationstakt arbeiten. Die Daten werden in Form von Datenpaketen zwischen den Rechnern des Mehrrechnersystems ausgetauscht. Jedes Datenpaket erhält vom sendenden Rechner eine Taktnummer, mit deren Hilfe ein empfangender Rechner ankommende Datenpakete in die korrekte Reihenfolge bringen kann. Auf diese Weise wird ein für das gesamte Mehrrechnersystem einheitlicher Datenstrom sichergestellt. Ein eigenes Synchronisationsnetzwerk dient dazu, den systemeinheitlichen Synchronisationstakt aufrechtzuerhalten. Über dieses Synchronisationsnetzwerk sendet ein ausgewählter Rechner (sog. "Master-Rechner") in kurzen Abständen Synchronisationssignale an die anderen Rechner. Derartige Lösungen erfordern allerdings spezielle Hardware, u. a. für das Synchronisationsnetzwerk, und sind daher teuer.

In US-A-5 506 962 ist ein verteiltes Verarbeitungssystem mit einer Vielzahl von Prozessoren zur Ausführung einer Sequenz von Verarbeitungsschritten offenbart. Zu verarbeitende Informationen werden zusammen mit einem Inhaltskode übertragen. Mittels einer Ereignisnummer wird eine empfangene Nachricht mit einer bereits zuvor empfangenen Nachricht verglichen, um wiederholt ausgesendete Nachrichten zu detektieren.

Es ist daher Aufgabe der Erfindung, ein kostengünstiges Verfahren zum Austausch von Datenpaketen innerhalb eines sicheren Mehrrechnersystems anzugeben, welches gewährleisten soll, daß alle Rechner den gleichen Datenstrom verarbeiten. Das Verfahren soll nicht die Bereitstellung eines eigenen Synchronisationsnetzwerks erfordern.

Die Erfindung löst diese Aufgabe mit Hilfe der in unabhängigen Ansprüche 1, 8 und 10 angegebenen Merkmale. Weitere vorteilhafte Ausgestaltungen der Erfindung sind den Unteransprüchen entnehmbar.

Die Erfindung wird nachfolgend anhand der Ausführungsbeispiele und der Zeichnungen eingehend erläutert. Es zeigen:
- Fig. 1 :: Ein 2-aus-3-Rechnersystem MRS als Beispiel für ein Mehrrechnersystem in schematischer Darstellung zur Erläuterung des erfindungsgemäßen Verfahrens;
- Fig. 2a:: Das 2-aus-3-Rechnersystem MRS aus Fig. 1, bei dem der Rechner R1 Datenpakete A an die anderen beiden Rechner R2 und R3 sendet;
- Fig. 2b:: Das 2-aus-3-Rechnersystem MRS aus Fig. 1, bei dem die beiden Rechner R2 und R3 ihrerseits Datenpakete B bzw. C an den Rechner R1 senden;
- Fig. 3a:: Das 2-aus-3-Rechnersystem MRS aus Fig. 1, bei dem die Rechner R1...R3 mit Statuszeichen S versehen sind;
- Fig. 3b:: Das 2-aus-3-Rechnersystem MRS aus Fig. 1, bei dem für ein Ausführungsbeispiel der Erfindung die lokalen Sichten LSₖ und die globale Sicht GS der Rechner R1...R3 angegeben ist;
- Fig. 4:: Schematische Darstellung zur Erläuterung, wie aus lokalen Sichten eine globale Sicht bestimmt werden kann;
- Fig. 5:: Das 2-aus-3-Rechnersystem MRS aus Fig. 1 zur Erläuterung eines Ausführungsbeispiels nach Anspruch 5;
- Fig. 6:: Das 2-aus-3-Rechnersystem MRS aus Fig. 1, bei dem die Kommunikationsverbindung KV12 gestört ist;
- Fig. 7:: Das 2-aus-3-Rechnersystem MRS aus Fig. 1, bei dem der Rechner R1 gestört ist;
- Fig. 8:: Stark schematisierte Darstellung eines Rechners in einem erfindungsgemäßen Mehrrechnersystem zur Erläuterung des Datenaustauschs innerhalb des Rechners und zwischen den Rechnern;
- Fig. 9:: Struktur eines Datenpakets;
- Fig. 10:: 3-aus-5-Rechnersystem mit zwei Übertragungsbussen.

### Ausführungsbeispiel 1:

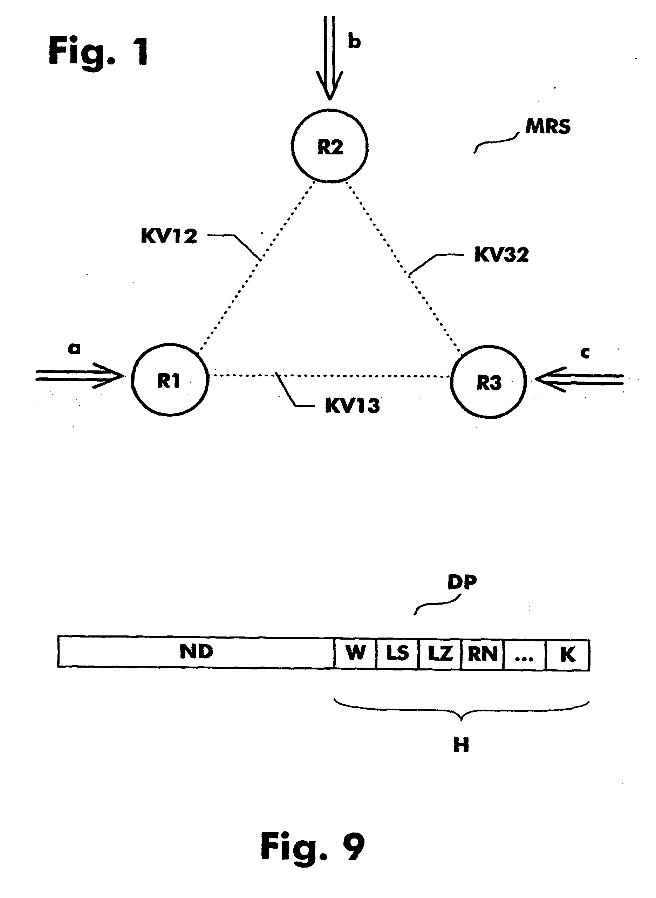

Als Beispiel für ein Mehrrechnersystem zeigt Fig. 1 in schematischer Darstellung ein 2-aus-3-Rechnersystem MRS, welches die Rechner R1, R2 und R3 umfaßt. Die drei Rechner sind über Kommunikationsverbindungen KV12, KV13 und KV32 vollständig miteinander vermascht. Die Kommunikationsverbindungen KV12, KV13 und KV32 ermöglichen eine bidirektionale Kommunikation zwischen den Rechnern. Realisiert werden können diese Kommunikationsverbindungen beispielsweise als physikalische Punkt-zu-Punkt-Verbindungen oder über ein lokales Netzwerk ("local area network", LAN), bei dem die freie Adressierbarkeit der Rechner gewährleistet ist. Dem Rechner R1 wird über nicht dargestellte Kommunikationsverbindungen eine Nachricht a zugeführt. In gleicher Weise erhält der Rechner R2 eine Nachricht b und der Rechner R3 eine Nachricht c. Die Nachrichtenquellen, die den Rechnern die Nachrichten zuführen, können beispielsweise andere Mehrrechnersysteme oder ein Einzelrechner sein, der nicht zum Mehrrechnersystem MRS gehört. Ebenso ist es möglich, daß die Nachrichten nicht von externen Nachrichtenquellen zugeführt werden, sondern in den Rechnern selbst von dort ablaufenden Applikationsprogrammen generiert werden.

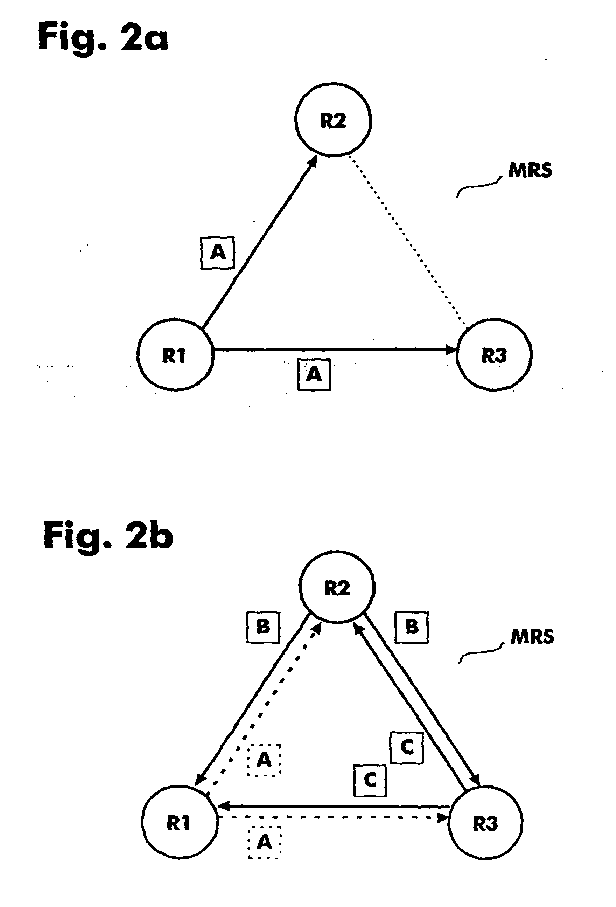

Nach Erhalt der Nachrichten setzen die Rechner gemäß einem vereinbarten Protokoll die Nachrichten a, b, c in entsprechende Datenpakete A, B und C um. Falls bei einem oder mehreren Rechnern keine Nachrichten anliegen, so werden Datenpakete erstellt, deren Nutzdatenbereich leer ist. Ebenso ist es möglich, mehrere anliegende Nachrichten gemeinsam in einem Datenpaket anzuordnen. In Fig. 2a ist dargestellt, wie einer der Rechner, hier der Rechner R1, mit der Übermittlung des von ihm erstellten Datenpakets A an die beiden benachbarten Rechner R2 und R3 beginnt. Welcher der Rechner in diesem Moment die Initiative ergreift, wird an späterer Stelle eingehender erläutert werden. Nach Empfangen des Datenpakets A senden die beiden anderen Rechner R2 und R3 ihrerseits die von ihnen erstellten Datenpakete B bzw. C aus. Dies ist in Fig. 2b anhand der durchgezogenen Pfeile dargestellt. Die dem Rechner R2 benachbarten Rechner R1 und R3 erhalten auf diese Weise jeweils ein Datenpaket B, die dem Rechner R3 benachbarten Rechner R1 und R2 jeweils ein Datenpaket C. Nach der Übertragung hat nun jeder der Rechner R1, R2 und R3 von jedem anderen Rechner im Mehrrechnersystem genau ein Datenpaket erhalten. In Fig. 2b ist dies daran erkennbar, daß auf jeden der Rechner genau zwei Pfeile (durchgezogen oder unterbrochen) gerichtet sind. Die in den einzelnen Rechnern anliegenden Nachrichten a, b und c sind also nach Durchführen des erfindungsgemäßen Verfahrens so auf die Rechner verteilt worden, daß alle Rechner über alle dem Gesamtsystem zugeführten Nachrichten verfügen können. Im folgenden wird der soeben geschilderte Vorgang als "Übertragungsrunde" bezeichnet. Entscheidend für das Zustandekommen einer solchen Übertragungsrunde ist die Tatsache, daß die beiden Rechner R2 und R3 nach Erhalt des vom Rechner R1 gesendeten Datenpakets A ihrerseits innerhalb einer vorgebbaren Zeitspanne eigene Datenpakete an alle anderen Rechner übermitteln.

Um einen einheitlichen Datenfluß in allen Rechnern zu gewährleisten, müssen nun die Datenpakete in eine einheitliche Reihenfolge gebracht werden. Dabei kann z. B. die Tatsache ausgenützt werden, daß jeder Rechner beim Empfang eines Datenpakets den Sender ermitteln kann. Eine Ermittlung des Senders ist sowohl bei physikalischen Punkt-zu-Punkt-Verbindungen als auch bei Netzwerken möglich und erfordert keine besondere Maßnahmen. Aufgrund der Senderermittlung lassen sich die empfangenen Datenpakete dem sendenden Rechner eindeutig zuordnen. In einer Vereinbarung kann dann festgelegt werden, daß die Datenpakete so zu sortieren sind, daß zuerst das vom Rechner R1 stammende Datenpaket A, anschließend das vom Rechner R2 stammende Datenpaket B und schließlich das vom Rechner R3 stammende Datenpaket C den in den Rechnern ablaufenden Applikationsprozessen zugeführt wird. Im oben dargestellten Beispiel würde dies eine Abfolge A → B → C ergeben. Auf diese Weise werden jedoch die dem Rechner R1 zugeführten Nachrichten bevorzugt bearbeitet. Daher kann es sinnvoll sein, die Reihenfolge in anderer Weise festzulegen. So ist z. B. denkbar, die Reihenfolge von Übertragungsrunde zu Übertragungsrunde zyklisch zu permutieren. In einer Runde 1 wird dann etwa die Abfolge A → B → C, in der darauffolgenden Runde 2 die Abfolge B' → C' → A' und anschließend in Runde 3 die Abfolge C" → A" → B" gewählt usw. Bei diesem Vorgehen sind alle Rechner bei der Festlegung der Reihenfolge gleichberechtigt.

Mit der Durchführung des erfindungsgemäßen Verfahrens wird somit allen Rechnern im Mehrrechnersystem ein einheitlicher Datenstrom zur Verfügung gestellt. Ein eigenes Synchronisationsnetzwerk ist hierzu im Gegensatz zu bekannten Lösungen nicht erforderlich. Ein weiterer Vorteil des erfindungsgemäßen Verfahrens liegt darin, daß aufgrund der zeitlichen Abfolge der Sende- und Empfangsvorgänge die Rechner in der Lage sind, bestimmte Fehler bei der Übertragung festzustellen und auch zu lokalisieren. Empfängt beispielsweise im oben anhand der Fig. 2b dargestellten Beispiel der Rechner R1 nicht vom Rechner R2 das Datenpaket B, so kann der Rechner R1 davon ausgehen, daß eine der folgenden Störungen vorliegt:
- der Rechner R2 hat das Datenpaket A nicht erhalten;
- der Rechner R2 hat das Datenpaket A erhalten, aber aufgrund eines rechnerinternen Fehlers kein Datenpaket B ausgesandt;
- der Rechner R2 hat ein Datenpaket B ausgesandt, dieses konnte jedoch aufgrund einer defekten Kommunikationsverbindung nicht zugestellt werden.

Der Rechner R1 kann aufgrund dieser Diagnose z. B. die Kommunikation mit dem Rechner R2 einstellen und weiterhin nur noch mit dem Rechner R3 kommunizieren.

### Ausführungsbeispiel 2:

Es ist u. U. je nach Konfigurierung des erfiridungsgemäßen Verfahrens nicht auszuschließen (siehe dazu die Ausführungen weiter unten), daß neben dem Rechner R1 fast zeitgleich ein andere Rechner eine Übertragungsrunde anstößt. So könnte beispielsweise der Rechner R2 nach dem Anstoßen einer Übertragungsrunde durch den Rechner R1, aber noch vor dem Empfang des Datenpakets A, eine weitere Übertragungsrunde mit dem Aussenden seines Datenpakets B anstoßen. In diesem Fall würde der Rechner R2 nach Empfang des Datenpakets A vom Rechner R1 sein Datenpaket B erneut aussenden, obwohl er mit diesem Datenpaket B kurz zuvor eine Übertragungsrunde angestoßen hat. Die Rechner R1 und R3 würden demnach das Datenpaket B zweimal erhalten. Außerdem besteht die Gefahr, daß es zu einer Art von "Ping-Pong-Effekt" kommt, bei dem die Rechner identische Datenpakete in endloser Folge einander übermitteln.

Um dies auszuschließen, ist bei einem Ausführungsbeispiel der Erfindung nach Anspruch 2 vorgesehen, daß ein Rechner in einer Übertragungsrunde nicht auf den Empfang eines Datenpakets mit dem Aussenden eines eigenen Datenpakets reagiert, wenn er in dieser Übertragungsrunde bereits selbst auf eigene Initiative ein Datenpaket an alle anderen Rechner gesendet hat. Dies setzt voraus, daß die Datenpakete Daten RN zur Kennzeichnung der Übertragungsrunde umfassen, so daß jeder Rechner empfangene Datenpakete jederzeit einer bestimmten Übertragungsrunde zuordnen kann. Wenn beispielsweise eine Übertragungsrunde i abgeschlossen ist und die beiden Rechner R1 und R2 unabhängig voneinander eine Übertragungsrunde 1+1 durch Aussenden von Datenpaketen A bzw. B anstoßen, so sendet der Rechner R2 in dieser Übertragungsrunde nicht noch einmal sein Datenpaket B, da die anderen Rechner dies bereits einmal empfangen haben oder demnächst empfangen werden. Er reagiert auch nicht mit dem Senden eines anderen selbst erstellten Datenpakets B', so daß der oben angesprochene "Ping-Pong-Effekt" vermieden wird. Gleiches gilt entsprechend für den Rechner R1.

### Ausführungsbeispiel 3:

Bei dem erfindungsgemäßen Verfahren findet die Kommunikation zwischen den Rechnern in Form von Übertragungsrunden statt. Am Ende einer solchen Übertragungsrunde hat jeder Rechner wenigstens ein Datenpaket von allen anderen Rechnern erhalten. Diese Form des Datenpaketaustausches ist insbesondere dann vorteilhaft, wenn die Datenpakete Statusinformationen zu den einzelnen Rechnern enthalten. Es kann auf diese Weise jeder einzelne Rechner für die vergangene Übertragungsrunde eine globale Sicht vom Systemstatus ermitteln. Was dies im einzelnen bedeutet, wird im folgenden eingehender beschrieben.

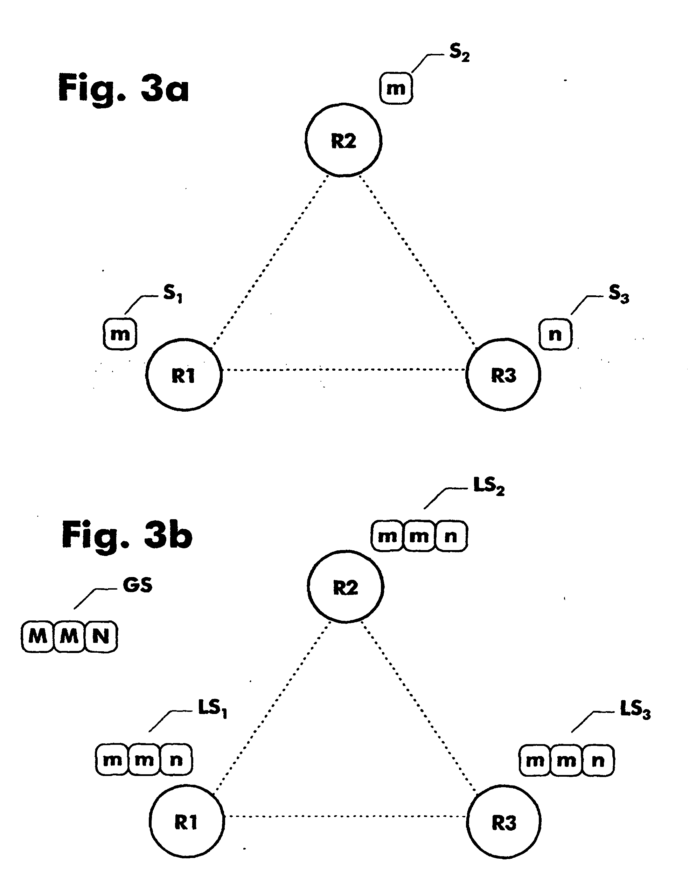

Fig. 3a zeigt das Mehrrechnersystem aus Fig. 1 und zusätzlich für jeden Rechner den Status Sₖ. Die beiden Rechner R1 und R2 arbeiten im dargestellten Beispiel fehlerfrei und sind deswegen vollwertige "Mitglieder" im Mehrrechnersystem. Sie sind daher mit dem Statuszeichen "m" gekennzeichnet. Es wird vereinbart, daß nur solche Daten weiter verarbeitet oder ausgewertet werden (etwa in einem Vergleicher), die von einem Rechner im "Mitglieder"- Status stammen. Der Rechner R3 ist in diesem Beispiel defekt und wird daher als "Nichtmitglied" bezeichnet. Ihm ist aus diesem Grunde das Statuszeichen "n" zugeordnet. Von diesem Rechner R3 stammende Daten werden daher verworfen.

Nach dem Durchführen einer Übertragungsrunde ermittelt jeder Rechner seine individuelle lokale Sicht LSₖ vom Systemstatus, indem er die empfangenen Datenpakete auswertet. Erhält beispielsweise der Rechner R1 vom Rechner R2 kein oder nur ein fehlerhaftes Datenpaket, so betrachtet er diesen Rechner in seiner lokalen Sicht LS₁ als "Nichtmitglied". Je nach Art des Fehlers kann es durchaus vorkommen, daß der aus Sicht des Rechners R1 fehlerhafte Rechner R2 sich selbst jedoch als fehlerfrei und deshalb als "Mitglied" betrachtet. In der lokalen Sicht LS₂ des Rechners R2 sind somit möglicherweise alle Rechner "Mitglieder". Die lokalen Sichten LSₖ vom Systemstatus können sich also unterscheiden.

Für bestimmte Zwecke ist es jedoch vorteilhaft, auch eine globale, für alle Rechner einheitliche Sicht GS vom Systemstatus zu ermitteln. Die globale Sicht vom Systemstatus wird insbesondere benötigt,
- damit auf Systemebene eine einheitliche Entscheidungsgrundlage gegeben ist, um bei den fehlerfreien Rechnern ("Mitglieder") die gleichen Verarbeitungsschritte in der gleichen Reihenfolge durchführen zu können,
- damit eine zentrale Fehlerbehandlungsinstanz Fehler erkennen und gegebenenfalls Maßnahmen zur Behebung einleiten kann,
- um defekte Rechner wieder in das Mehrrechnersystem einzubinden

Die Bestimmung der globalen Sicht ist Gegenstand der folgenden Abschnitte.

Nach Abschluß einer Übertragungsrunde i ermittelt jeder Rechner seine lokale Sicht LSₖ vom Systemstatus. In der folgenden Übertragungsrunde 1+1 übermittelt jeder Rechner seine lokale Sicht LSₖ vom Systemstatus in Übertragungsrunde i den anderen Rechnern. Nach Abschluß der Übertragungsrunde i+1 besitzt somit jeder Rechner von allen Rechnern im Mehrrechnersystem deren lokalen Sichten der vorhergehenden Übertragungsrunde i. Aus diesen lokalen Sichten kann nun jeder Rechner nach einer vereinbarten Regel eine globale Sicht vom Systemstatus in Übertragungsrunde i ermitteln. Eine solche Regel kann z. B. die folgenden Schritte umfassen:
- Verwende die lokalen Sichten LSₖ vom Systemstatus in Übertragungsrunde i derjenigen Rechner, die bei der globalen Sicht vom Systemstatus in dieser Übertragungsrunde i den Status "Mitglied" hatten;
- Führe für diese lokalen Sichten LSₖ einen Mehrheitsentscheid durch;
- Akzeptiere einen durch Mehrheitsentscheid als "Mitglied" bestimmten Rechner nur dann als solchen, wenn dieser sich selbst in der laufenden Übertragungsrunde als "Mitglied" gemeldet hat.

Die globale Sicht GS für eine Übertragunsrunde ist beispielhaft in Fig.3b durch die Symbole "MMN" gekennzeichnet. Dies bedeutet, daß die Rechner R1 und R2 global als Mitglieder anerkannt werden, während der Rechner R3 als Nichtmitglied betrachtet wird. Ebenfalls dargestellt sind die lokalen Sichten LSₖ der Rechner R1...R3 vom Systemstatus der vorhergehenden Übertragungsrunde. In diesem einfachen Beispiel haben alle Rechner R1...R3 die gleiche lokale Sicht vom Systemstatus der vorhergehenden Übertragungsrunde, nämlich "mmn". Dies bedeutet, daß alle Rechner die Rechner R1 und R2 als Mitglieder und den Rechner R3 als "Nichtmitglied" ansehen haben.

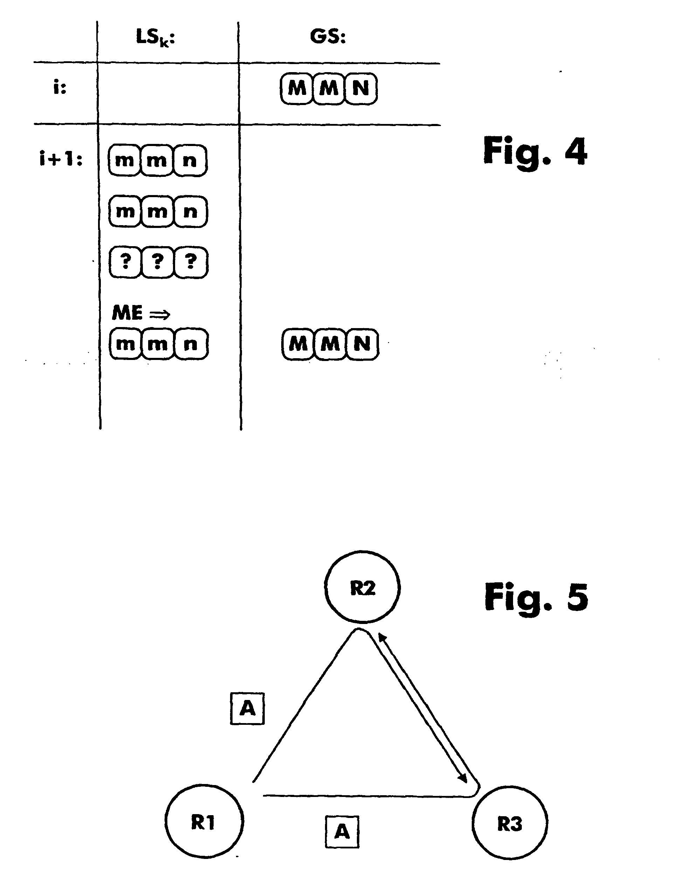

Die Ermittlung einer globalen Sicht wird in Fig. 4 anhand eines einfachen Beispiels noch einmal erläutert. Die globale Sicht GS in der Übertragungsrunde i sei "MMN", d. h. die beiden Rechner R1 und R2 seien als Mitglieder anerkannt, während der Rechner R3 als defekt angesehen wird. Entsprechend der oben angeführten Regel werden daher in der folgenden Übertragungsrunde i+1 nur die lokalen Sichten der Rechner R1 und R2 beim Mehrheitsentscheid ME berücksichtigt. Im dargestellten Beispiel stimmen diese lokalen Sichten überein, so daß der Mehrheitsentscheid ME das Ergebnis "mmn" liefert. Die lokale Sicht des defekten Rechners R3 ist u. U. unsinnig, fehlerbehaftet oder unvollständig, was in Fig. 4 durch die Symbole " 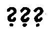 " dargestellt wird. Da die beiden als Mitglieder angegebenen Rechner R1 und R2 sich selbst in ihrer lokalen Sicht LS als Mitglieder sehen, ist die globale Sicht vom Systemstatus gleich dem. Ergebnis des Mehrheitsentscheids, also "MMN".

Das Konzept, den Datenpaketen Statusinformationen beizufügen, kann je nach Anforderungen an das Gesamtsystem erweitert werden. So können neben den angeführten Statusmöglichkeiten "Mitglied" und "Nichtmitglied" auch Zwischenzustände wie "Vorläufiges Mitglied" oder "Anwärter auf Mitglied" definiert werden. Dies ist etwa dann sinnvoll, wenn defekte Rechner ohne Eingreifen einer Bedienperson wieder in das Mehrrechnersystem eingebunden werden sollen. Bei einem solchen Einbinden ist es aus Gründen der Sicherheit zweckmäßig, die Funktion des oder der einzubindenden Rechner zunächst von den nicht defekten Rechnern beobachten zu lassen. Eine globale Anerkennung als Mitglied erfolgt erst dann, wenn der einzubindende Rechner eine Art von "Probezeit" erfolgreich bestanden hat.

Bei einem weiteren vorteilhaften Ausführungsbeispiel enthalten die Datenpakete Daten, aus denen eine lokale Zeit des das Datenpaket sendenden Rechners ermittelbar ist. Unter lokaler Zeit wird die Zeit verstanden, die der sendende Rechner zum Zeitpunkt der Datenpaketerstellung von einer rechnerinternen oder auch externen Uhr abgreift. Nach Abschluß einer Übertragungsrunde ist jeder Rechner im Mehrrechnersystem in der Lage, aus diesen Daten eine globale Zeit zu ermitteln. Dies kann beispielsweise durch einfache Bildung des Medianwertes (=Zentralwert) aus den einzelnen lokalen Zeiten geschehen. Eine globale Zeit benötigen häufig die vom Mehrrechnersystem ausgeführten Applikationsprogramme oder auch bestimmte externe Module wie etwa der oben bereits angesprochene Vergleicher, der die Ergebnisse der einzelnen Rechner einem Mehrheitsentscheid unterwirft.

Ferner kann vorgesehen sein, den Datenpaketen Kontrolldaten beizufügen, die der Überprüfung dienen, ob alle oder ein Teil der im Datenpaket enthaltenen Daten korrekt empfangen worden sind. Durch derartige, an sich bekannte Maßnahmen läßt sich sicherstellen, daß nur solche Datenpakete ausgewertet werden - etwa zur Ermittlung einer globalen Sichtweise vom Systemstatus -, die tatsächlich fehlerfrei übertragen worden sind.

### Ausführungsbeispiel 4:

In einem besonders vorteilhaften Ausführungsbeispiel nach Anspruch 6 leiten die Rechner R1...R3 empfangene Datenpakete so an die benachbarten Rechner weiter, daß jeder Rechner jedes umlaufende Datenpaket im fehlerfreien Fall wenigstens zweimal empfängt. Dies sei im folgenden anhand der Fig. 5 erläutert. Der Rechner R1 sendet in diesem Beispiel ein Datenpaket A aus. Die beiden Rechner R2 und R3 empfangen dieses Datenpaket A und reichen es an den Rechner R3 bzw. R2 weiter. Auf diese Weise erhält also der Rechner R2 das Datenpaket A einmal direkt vom Rechner R1 und einmal indirekt über den Rechner R3. Gleiches gilt entsprechend für den Rechner R3. Von den Rechnern R2 und R3 gesendete Datenpakete B bzw. C werden ebenfalls in der geschilderten Weise weitergereicht. Durch den zweifachen Empfang wird die Toleranz des Mehrrechnersystems gegenüber Fehlern und Ausfällen entscheidend verbessert. Ferner ist es möglich, eine größere Klasse von Fehlern genau zu lokalisieren, vor allem dann, wenn die Datenpakete Kontrolldaten wie oben beschrieben enthalten. Nachfolgend werden stellvertretend zwei in Mehrrechnersystem mögliche Fehlerszenarien erläutert, um die Vorteile dieser Ausführungsform der Erfindung zu demonstrieren.

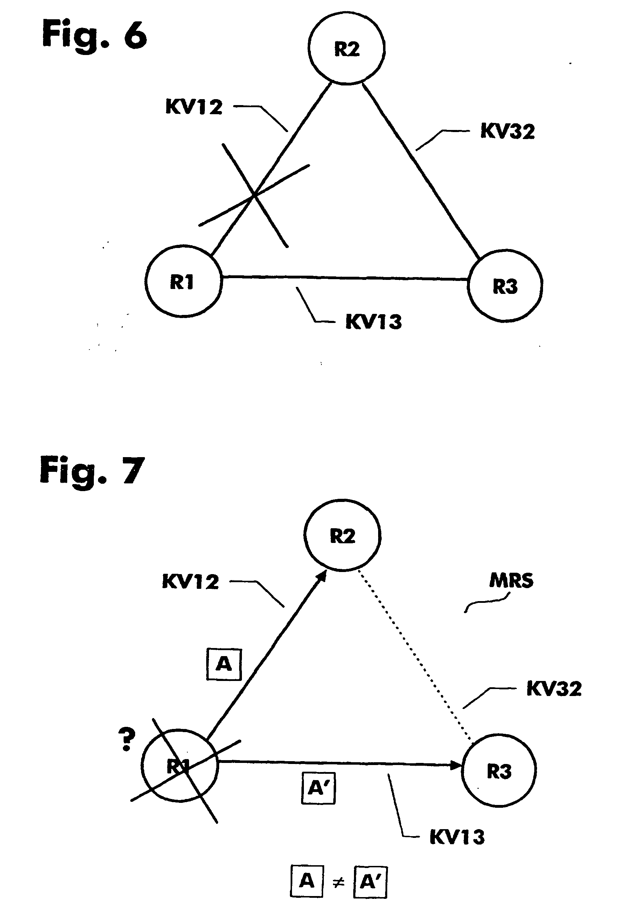

Fig. 6 zeigt das Mehrrechnersystem aus Fig. 1, bei dem die Kommunikationsverbindung KV12 zwischen den Rechnern R1 und R2 in beiden Übertragungsrichtungen unterbrochen ist. Der Rechner R2 kann Datenpakete somit nicht direkt vom Rechner R1, sondern nur noch indirekt über den Rechner R3 empfangen. Entsprechendes gilt für Datenpakete, die der Rechner R2 an den Rechner R1 sendet. Aufgrund des erfindungsgemäßen Weiterreichens der Datenpakete wird also die Unterbrechung der Kommunikationsverbindung KV12 toleriert. Bei einer vorteilhaften Variante der Erfindung enthalten die Datenpakete Daten, die den Weg kennzeichnen, den die Datenpakete durch das Mehrrechnersystem genommen haben. Damit ist es für jeden Rechner möglich, den Fehler genau zu lokalisieren, denn der Rechner R1 weiß dann beispielsweise, daß er nur ein Datenpaket vom Rechner R2 erhalten hat, welches den Weg über den Rechner R3 genommen hat. Die Ursache davon kann nur eine Unterbrechung der Kommunikationsverbindung KV12 sein. In analoger Weise können auch die anderen Rechner R2 und R3 anhand des Übertragungsweges der empfangenen Datenpakete feststellen, an welcher Stelle im Mehrrechnersystem eine Kommunikationsverbindung unterbrochen ist. Diese lokal bei jedem einzelnen Rechner ermittelten Statusinformationen werden vorzugsweise durch Übertragungsrunden zwischen den Rechnern ausgetauscht und dazu - wie oben beschrieben - verwendet, eine globale Sicht vom Systemstatus zu bestimmen. Eine zentrale Fehlerbehandlungsinstanz führt dann geeignete Maßnahmen durch. Bei dem in Fig. 6 dargestellten Beispiel könnte eine mögliche Maßnahme z. B. darin bestehen, das Senden und Empfangen über diese Kommunikationsverbindung KV12 dauerhaft oder für eine vorbestimmte Zeit vollständig einzustellen.

Bei dem in Fig. 7 gezeigten Mehrrechnersystem MRS sendet der Rechner R1 nicht, wie eigentlich vorgesehen, an beide Rechner R2 und R3 identische Datenpakete A, sondern unterschiedliche Datenpakete A und A'. Die Ursache eines solchen, als "byzantinisch" bezeichneten Fehlerszenarios kann beispielsweise darin liegen, daß die Sendeeinheit für eine Kommunikationsverbindung gestört ist. Ohne Weiterleiten der Datenpakete gemäß Anspruch 6 würden die Rechner R2 und R3 nicht feststellen können, daß sie unterschiedliche Datenpakete empfangen haben. Ein Fehler ist also aus ihrer Sicht nicht aufgetreten. Sie würden deshalb die Datenpakete A bzw. A' weiter verarbeiten, jedoch dabei - da sich die Datenpakete voneinander unterscheiden - möglicherweise zu unterschiedlichen Ergebnissen kommen. Da wenigstens eines der Ergebnisse falsch sein muß, könnte der Fall auftreten, daß gerade dieses falsche Ergebnis mit dem vom defekten Rechner R1 ermittelten Ergebnis übereinstimmt. Ein Einfachfehler, nämlich die Störung des Rechners R1, könnte somit bereits zu einer Übereinstimmung zweier falscher Ergebnisse und damit zu einem gefährlichen Zustand führen.

Wenn hingegen die Datenpakete gemäß Anspruch 6 weitergeleitet werden, so erhalten die Rechner R2 und R3 in diesem Falle jeweils zwei Datenpakete vom Rechner R1 (eines direkt und eines indirekt), die sich jedoch voneinander unterscheiden. Wenn die Datenpakete Kontrolldaten enthalten, so können die Rechner R2 und R3 feststellen, ob die Datenpakete auf dem Übertragungsweg verfälscht worden sind. Ist eine Verfälschung nicht aufgetreten, so können die Rechner R2 und R3 zuverlässig feststellen, daß der Rechner R1 unterschiedliche Datenpakete A und A' gesendet hat. Da für die Rechner R2 und R3 jedoch nicht erkennbar ist, welches der beiden Datenpakete das richtige ist, verwerfen beide Rechner die vom Rechner R1 direkt oder indirekt empfangenen Datenpakete. In der lokalen Sicht der beiden Rechner R2 und R3 und auch in der globalen Sicht wird der Rechner R1 daher als "Nichtmitglied" betrachtet.

Die folgenden Ausführungen behandeln die bereits oben angesprochene Frage, von welchen Rechnern im Mehrrechnersystem die Übertragungsrunden angestoßen werden. Erfindungsgemäß sind hier verschiedene Kriterien vorgesehen, die einzeln oder auch kombiniert zur Anwendung gelangen können:
a) Das vom einem Rechner ausgeführte Applikationsprogramm gibt selbst den Befehl, ein Datenpaket auszusenden und damit eine Übertragungsrunde anzustoßen. Da in Mehrrechnersystemen alle Rechner meist das gleiche Applikationsprogramm parallel abarbeiten, kann es dazu kommen, daß alle Rechner gleichzeitig oder annähernd gleichzeitig, d. h. in sehr kurzen zeitlichen Abständen, den Befehl erhalten, eine Übertragungsrunde anstoßen. Es kommt dann zu dem Szenario, welches oben zum Ausführungsbeispiel nach Anspruch 2 geschildert worden ist.
b) Ein beliebiger Rechner im Mehrrechnersystem stößt regelmäßig in vorab oder auch im Laufe des Betriebs festgelegten zeitlichen Abständen eine Übertragungsrunde an. Auf diese Weise ist insbesondere gewährleistet, daß Statusinformationen zwischen den Rechnern regelmäßig ausgetauscht werden, so daß eventuell aufgetretene Fehlfunktionen von Rechnern oder Übertragungswegen rasch entdeckt werden. Wenn allerdings nur ein Rechner für das Anstoßen verantwortlich ist, so werden bei einem Ausfall eben dieses Rechners keine Übertragungsrunden mehr angestoßen. Daher wird es in der Regel zweckmäßiger sein, alle Rechner zeitlich versetzt in regelmäßigen Abständen Übertragungsrunden anstoßen zu lassen. Wenn bei einem Rechner keine auszutauschenden Nachrichten anliegen, so sendet der betreffende Rechner ein Datenpaket aus, dessen Nutzdatenbereich leer ist.
c) Ein Rechner stößt zumindest immer dann eine Übertragungsrunde durch Aussenden eines Datenpakets an, wenn die in seinem Nachrichtenpuffer (näheres dazu siehe unten) gespeicherte Nachrichtenmenge ein vorab festgelegtes Maß übersteigt. Dies reduziert den Austausch von leeren Datenpaketen. An die Stelle der in Bytes meßbaren Nachrichtenmenge kann auch die Anzahl der Nachrichten treten. So läßt sich festlegen, daß ein Rechner eine Übertragungsrunde anstößt, sobald beispielsweise 5 Nachrichten in seinem Nachrichtenpuffer gespeichert sind.
d) Bei sicherheitskritischen Mehrrechnersystemen ist es sinnvoll, Nachrichten mit einem Prioritätswert zu versehen, der ein Maß für die Wichtigkeit der Nutzdaten ist. In einer Variante der Erfindung ist vorgesehen, den Prioritätswert in den Datenpaketen zusammen mit den Nutzdaten und evtl. weiteren Daten zu übertragen. Eine Übertragungsrunde wird bei dieser Variante angestoßen, sofern der Prioritätswert einer Nachricht über einer vorab festgelegten Schwelle liegt. Dadurch ist gewährleistet, daß wichtige Nachrichten unverzüglich ausgetauscht werden.

Vorzugsweise werden die Kriterien a) bis d) so kombiniert, daß ein tragbarer Kompromiß zwischen den hohen Sicherheitsanforderungen einerseits und dem Erfordernis eines geringen Übertragungsaufkommens auf den Kommunikationsverbindungen andererseits erreicht wird. Wie bereits erwähnt, kann es bei Kombination der Kriterien durchaus dazu kommen, daß mehrere Rechner gleichzeitig oder annähernd gleichzeitig eine Übertragungsrunde anstoßen.

### Ausführungsbeispiel 5:

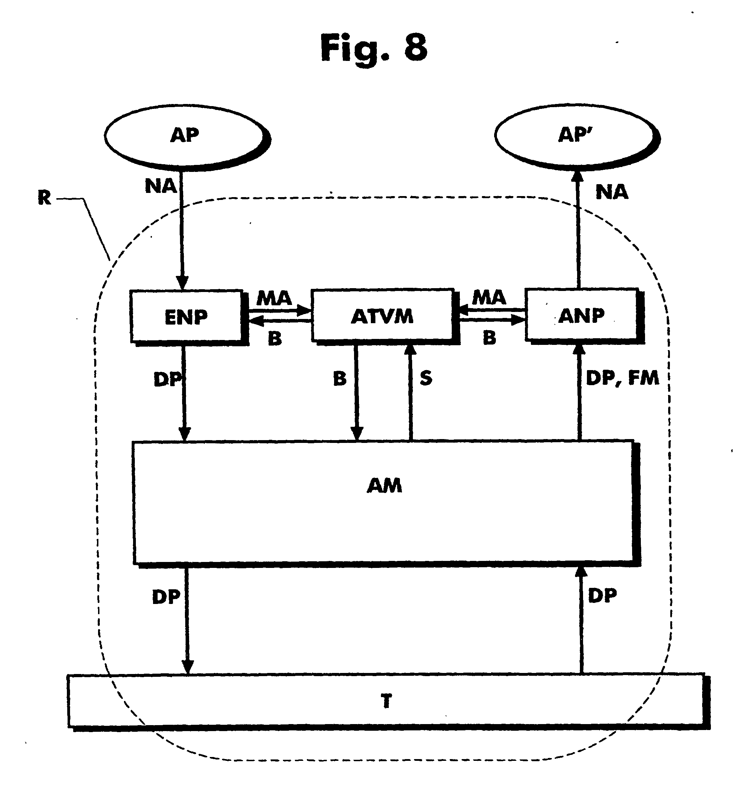

In Fig. 8 ist schematisch in einem stark vereinfachten Modell dargestellt, wie nach einem anderen Ausführungsbeispiel des erfindungsgemäßen Verfahrens Nachrichten und Datenpakete innerhalb eines Rechners verarbeitet und im Mehrrechnersystem ausgetauscht werden. Die zu einem Rechner R gehörende Module sind durch eine gestrichelte Linie eingefaßt. Ein von einem beliebigen Rechner R im Mehrrechnersystem ausgeführter Applikationsprozeß AP gibt an den Rechner R Nachrichten NA ab. Diese Nachrichten NA werden in einem Eingangsnachrichtenpuffer ENP gepuffert. Bei Eintreffen einer Nachricht teilt dies der Eingangsnachrichtenpuffer ENP einem Austauschvorschriftenmodul ATVM über Mitteilungen MA mit. Im Austauschvorschriftenmodul ATVM sind die grundlegenden Austauschvorschriften abgelegt, nach denen der Datenaustausch zwischen den Rechnern innerhalb des Mehrrechnersystems vorzunehmen ist. In den Austauschvorschriften ist beispielsweise definiert, nach welchen Kriterien das Anstoßen von Übertragungsrunden erfolgt. Ferner hat das Austauschvorschriftenmodul ATVM die Aufgabe, den Nachrichtenstrom im Eingangsnachrichtenpuffer ENP (und auch im Ausgangsnachrichtenpuffer ANP, s. u.) zu kontrollieren.

Die Mitteilungen MA vom Eingangsnachrichtenpuffer ENP an das Austauschvorschriftenmodul ATVM enthalten in diesem Ausführungsbeispiel Informationen, welchen Prioritätswert die zuletzt eingegangene Nachricht hat. Das Austauschvorschriftenmodul ATVM vergleicht diesen Prioritätswert mit einem vorgegebenen Schwellenwert und veranlaßt bei Überschreiten des Schwellenwertes über Befehle B, daß der Eingangsnachrichtenpuffer ENP aus den gepufferten Nachrichten NA ein Datenpaket DP erstellt und dieses Datenpaket an das Austauschmodul AM zum Anstoßen einer Übertragungsrunde abgibt.
Das Datenpaket DP hat einen Nachrichtenkopf, der u. a. die Absender- und Empfängeradresse enthält, und einen Kern, in dem die zu übertragenden Nutzdaten abgelegt sind.

Das Austauschmodul AM erfüllt in diesem Ausführungsbeispiel u. a. die Funktionen der Netzwerk- und Transportschichten im OSI-Schichtenmodell. Den darüberliegenden Schichten bleiben somit die physikalische Realisierung der Kommunikationsverbindungen, die verwendeten Übertragungsverfahren und die Anzahl der Rechner im Mehrrechnersystem verborgen. Ferner hat das Austauschmodul AM die Aufgabe, den Kopf der Datenpakete u. a. um folgende Informationen zu erweitern:
- eine Nummer zur Kennzeichnung der Übertragungsrunde;
- die neu ermittelte lokale Sichtweise vom Systemstatus;
- die lokale Zeit;
- eine Kennzeichnung des Rechners, auf dem das Austauschmodul AM agiert.

Vom Austauschmodul gelangt das Datenpaket DP zur Treiberschicht T, die der Verbindungsschicht im OSI-Schichtenmodell entspricht und die die Datenpakete auf einen physikalischen Bitstrom abbildet. Die Treiberschicht stellt sicher, daß das Datenpaket innerhalb einer beschränkten Zeitspanne an andere, in Fig. 8 nicht dargestellte Rechner übertragen wird. Die Treiberschicht sollte sicherstellen, daß Datenpakete bei der Übertragung nicht umsortiert werden, da ansonsten u. U. nicht gewährleistet ist, daß alle Rechner im Mehrrechnersystem einen einheitlichen Datenstrom verarbeiten können. Um eine eindeutige Fehlerzuordnung zu gewährleisten, sollten ferner bei der Übertragung keine Datenpakete verfälscht oder neu generiert werden. Für die darüberliegenden Schichten ist die Treiberschicht transparent.

In Empfangsrichtung gelangen Datenpakete DP über die Treiberschicht T zum Austauschmodul AM, in dem insbesondere die im Kopf der Datenpakete enthaltenen Informationen (lokale Sicht vom Systemstatus, lokale Zeit, Nummer der Übertragungsrunde etc.) ausgewertet werden. Das Austauschmodul erstellt Fehlermeldungen FM und gibt diese zusammen mit den Datenpaketen DP an einen Ausgangsnachrichtenpuffer ANP weiter. Der Ausgangsnachrichtenpuffer ANP extrahiert aus den Datenpaketen die Nachrichten NA und stellt diese einem Applikationsprozeß AP' zur Verfügung.

Fig. 9 zeigt zusammenfassend die Struktur eines Datenpakets DP, welches in einem bevorzugten Ausführungsbeispiel der Erfindung beim Austausch von Daten zwischen den Rechnern verwendet wird. Der Kern des Datenpakets DP besteht aus den Nutzdaten ND. Der Kopf H des Datenpakets enthält u. a.
- Daten W zur Kennzeichnung, welchen Weg das Datenpaket durch das Mehrrechnersystem genommen hat,
- Daten (LS), die die lokale Sicht des sendenden Rechners vom Systemstatus in der vorhergehenden Übertragungsrunde kennzeichnen,
- Daten LZ, aus denen die lokale Zeit des das Datenpaket sendenden Rechners ermittelbar ist,
- Daten RN zur Kennzeichnung der aktuellen Übertragungsrunde,
- Kontrolldaten K zum Überprüfen, ob alle oder ein Teil der vorstehend genannten Daten korrekt empfangen worden sind.

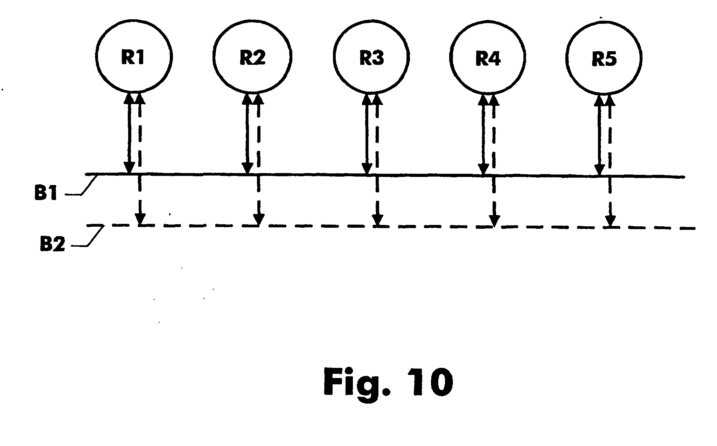

Die bislang erläuterten Ausführungsbeispiele der Erfindung beziehen sich sämtlich auf ein 2-aus-3-Rechnersystem, da dort das erfindungsgemäße Verfahren besonders vorteilhaft anwendbar ist. Das Verfahrens kann jedoch ohne Modifikationen auch für Mehrrechnersysteme mit anderen Redundanzgraden vorteilhaft eingesetzt werden. Die oben geschilderten Ausführungsbeispiele lassen sich beispielsweise auch auf ein 2-aus-2-Rechnersystem übertragen. Ebenso kann bei einem 3- aus-5-Rechnersystem die Kommunikation zwischen den Rechnern noch dem erfindungsgemäßen Verfahren durchgeführt werden. Anstelle einer Einzeladressierung der Rechner kann es dann jedoch vorteilhaft sein, die Kommunikation im "Broadcasting"-Modus durchzuführen, d. h. Datenpakete werden entweder an alle oder an keinen Rechner übermittelt. Fig. 10 zeigt ein Beispiel für ein derartiges 3-aus-5-Rechnersystem. Fünf Rechner R1...R5 kommunizieren im "Broadcasting"-Modus über einen ersten Bus B1 und einen zweiten Bus B2 miteinander. Der zweite Bus B2 ist optional und wird eingesetzt, um die Verfügbarkeit des Mehrrechnersystems zu erhöhen.

Eine Übertragungsrunde umfaßt bei diesem Ausführungsbeispiel die folgenden Schritte:
- ein Rechner, beispielsweise Rechner R1, sendet ein Datenpaket A an alle Rechner R2...R5;
- die Rechner R2...R5 setzen daraufhin eigene Datenpakete B, C, D und E ab, die von allen anderen Rechnern empfangen werden.

Eine zusätzliche Redundanz kann bei dieser Anordnung hergestellt werden, wenn nach der ersten Übertragungsrunde über den ersten Bus B1 eine zweite Übertragungsrunde über den Bus B 1 und/oder über den Bus B2 durchgeführt wird. Die Möglichkeiten der Fehlerlokalisation sind beim Broadcast-Modus jedoch nicht so vielfältig wie bei den oben geschilderten Ausführungsbeispielen.

## Patentansprüche

1. Verfahren zum Austausch von Datenpaketen (A, B, C in Fig. 2b) zwischen den Rechnern eines Mehrrechnersystems (MRS) wobei die Rechner die gleichen Aufgaben parallel und unabhängig voneinander bearbeiten,
**dadurch gekennzeichnet,**
**daß** der Austausch der Datenpakete in Form von aufeinanderfolgenden Übertragungsrunden erfolgt wobei die Datenpackete in allen Rechnern in eine einheitliche Reihenfolge gebracht werden, welche folgende Schritte umfassen:
a) ein beliebiger Rechner (R1) sendet auf eigene Initiative ein erstes Datenpaket (A) an alle anderen Rechner (R2, R3),
b) jeder der anderen Rechner (R2, R3) reagiert auf den Empfang des ersten Datenpakets (A) innerhalb einer vorgebbaren Zeitspanne mit dem Aussenden jeweils eines eigenen Datenpakets (B, C) an jeweils alle anderen Rechner im Mehrrechnersystem.

2. Verfahren nach Anspruch 1, bei dem einer der anderen Rechner (R2, R3) in einer Übertragungsrunde nicht auf den Empfang des ersten Datenpakets (A) reagiert, wenn er in dieser Übertragungsrunde bereits selbst auf eigene Initiative ein Datenpaket an alle anderen Rechner gesendet hat.

3. Verfahren nach Anspruch 1 oder 2, bei dem die Datenpakete (DP in Fig. 9) wenigstens eine der folgenden Informationen enthalten:
a) Nutzdaten (ND),
b) Daten (W) zur Kennzeichnung, welchen Weg das Datenpaket durch das Mehrrechnersystem genommen hat,
c) Daten (LS), die die lokale Sicht des sendenden Rechners vom Systemstatus in der vorhergehenden Übertragungsrunde kennzeichnen,
d) Daten (LZ), aus denen die lokale Zeit des das Datenpaket sendenden Rechners ermittelbar ist,
e) Daten (RN) zur Kennzeichnung der aktuellen Übertragungsrunde,
f) Kontrolldaten (K) zum Überprüfen, ob alle oder ein Teil der vorstehend genannten Daten korrekt empfangen worden sind.

4. Verfahren nach Anspruch 3, bei dem jeder Rechner aus den einzelnen lokalen Sichten (LSₖ) der Rechner vom Systemstatus eine für alle Rechner gleiche globale Sicht (GS) vom Systemstatus ermittelt.

5. Verfahren nach Anspruch 3, bei dem mit Hilfe der Daten (LZ), aus denen die lokale Zeit des das Datenpaket sendenden Rechners ermittelbar ist, eine synchronisierte globale Zeit ermittelt wird.

6. Verfahren nach einem der vorhergehenden Ansprüche, bei dem ein von einem beliebigen Rechner (R1 in Fig. 5) an die anderen Rechner (R2, R3) gesendetes Datenpaket (A) so von diesen anderen Rechnern weitergeleitet wird, daß jeder der anderen Rechner dieses Datenpaket im fehlerfreien Fall wenigstens zweimal empfängt.

7. Verfahren nach einem der vorhergehenden Ansprüche, bei dem ein Rechner auf eigene Initiative allen anderen Rechnern des Mehrrechnersystems ein Datenpaket sendet, wenn eine oder mehrere der folgenden Bedingungen erfüllt sind:
a) ein von dem Rechner ausgeführtes Applikationsprogramm gibt einen Sendebefehl;
b) seit dem letzten Senden eines Datenpakets ist eine vorgebbare Auslösezeitspanne verstrichen;
c) die im Rechner zur Übermittlung anstehende Nutzdatenmenge überschreitet ein vorgebbares Maß;
d) die Anzahl von im jeweiligen Rechner zur Übermittlung anstehenden Nachrichten überschreitet eine vorgebbare Zahl;
e) im Rechner steht eine Nachricht zur Übermittlung an, deren Prioritätswert über einer vorgebbaren Schwelle liegt.

8. Mehrrechnersystem mit wenigstens zwei Rechnern, die Mittel zum Austausch von Datenpaketen umfassen, wobei die Rechner die gleichen Aufgaben parallel und unabhängig voneinander bearbeiten,
**dadurch gekennzeichnet,**
**daß** der Austausch der Datenpakete in Form von aufeinanderfolgenden Übertrogungsrunden erfolgt wobei die Datenpackete in allen Rechnern in eine einheitliche Reihenfolge gebracht werden, und wobei
a) ein beliebiger Rechner (R1) derart ausgestaltet ist, auf eigene Initiative ein erstes Datenpaket (A) an alle anderen Rechner (R2, R3) zu senden, und
b) jeder der anderen Rechner (R2, R3) Auslösemittel (ATVM, AM in Fig. 8) umfasst, die derart ausgestaltet sind, bei Empfang des ersten Datenpakets (A) innerhalb einer vorgebbaren Zeitspanne das Aussenden jeweils eines eigenen Datenpakets (B, C) an jeweils alle anderen Rechner im Mehrrechnersystem auszulösen.

9. Mehrrechnersystem nach Anspruch 8, bei denen jeder Rechner Mittel zum Umsetzen von Nachrichten in Datenpakete umfaßt, welche wenigstens eine der folgenden Informationen enthalten:
a) Nutzdaten (ND in Fig. 9),
b) Daten (W) zur Kennzeichnung, welchen Weg das Datenpaket durch das Mehrrechnersystem genommen hat,
c) Daten (LS), die die lokale Sicht des sendenden Rechners vom Systemstatus in der vorhergehenden Übertragungsrunde kennzeichnen,
d) Daten (LZ), aus denen die lokale Zeit des das Datenpaket sendenden Rechners ermittelbar ist,
e) Daten (RN) zur Kennzeichnung der aktuellen Übertragungsrunde,
f) Kontrolldaten (K) zum Überprüfen, ob alle oder ein Teil der vorstehend genannten Daten korrekt empfangen worden sind.

10. Ein oder mehrere Datenträger mit einem darauf gespeicherten Datenverarbeitungsprogramm, welches bei Einlesen in ein Mehrrechnersystem mit wenigstens zwei Rechnern das Verfahren nach einem der Ansprüche 1 bis 7 steuert.

## Claims

1. Method for exchanging data packets (A, B, C in Fig. 2b) between the computers of a multicomputer system (MRS), the computers processing the same tasks in parallel and independently of one another,
**characterized in that**
the exchange of data packets occurs in the form of successive transmission rounds, the data packets being brought into a uniform order in all computers, and the transmission rounds comprising the following steps:
a) any computer (R1) sends a first data packet (A) on its own initiative to all other computers (R2, R3),
b) each of the other computers (R2, R3) reacts to the receipt of the first data packet (A) within a predefinable time by sending in each case a data packet of their own (B, C) to all other computers respectively in the multicomputer system.

2. Method according to Claim 1, in which one of the other computers (R2, R3) in a transmission round does not react to the receipt of the first data packet (A), if it has already in this transmission round sent a data packet itself on its own initiative to all other computers.

3. Method according to Claims 1 or 2, in which the data packets (DP in Fig. 9) contain at least one of the following items of information:
a) user data (ND),
b) Data (W) to identify which path the data packet has taken through the multicomputer system,
c) Data (LS), which identifies the sending computer's local view of the system status in the preceding transmission round,
d) Data (LZ), from which the local time of the computer sending the data packet can be determined,
e) Data (RN) to identify the current transmission round,
f) Control data (K) for checking whether all or part of the data mentioned above has been correctly received.

4. Method according to Claim 3, in which each computer determines, from the individual computers' local views (LSₖ) of the system status, a global view (GS) of the system status identical for all computers.

5. Method according to Claim 3, in which with the help of the data (LZ), from which the local time of the computer sending the data packet can be determined, a synchronized global time is determined.

6. Method according to one of the preceding claims, in which a data packet (A) sent from any one computer (R1 in Fig. 5) to the other computers (R2, R3) is forwarded by these other computers in such a way that each of the other computers receives this data packet at least twice in the absence of any faults.

7. Method according to one of the preceding claims, in which a computer on its own initiative sends a data packet to all other computers of the multicomputer system, if one or more of the following conditions are satisfied:
a) an application program executed by the computer gives a send command;
b) a predefinable trigger interval has elapsed since the last sending of a data packet;
c) the quantity of user data waiting in the computer for transmission exceeds a predefinable size;
d) the number of messages waiting in the respective computer for transmission exceeds a predefinable figure;
e) a message whose priority value is above a predefinable threshold is waiting in the computer for transmission.

8. Multicomputer system with at least two computers, which include means of exchanging data packets, the computers processing the same tasks in parallel and independently of one another,
**characterized in that**
the exchange of data packets occurs in the form of successive transmission rounds, the data packets being brought into a uniform order in all computers, and where
a) any computer (R1) is developed in such a way that it sends a first data packet (A) on its own initiative to all other computers (R2, R3), and
b) each of the other computers (R2, R3) includes triggering means (ATVM, AM in Fig. 8), which are developed such that upon receipt of the first data packet (A) they trigger the sending in each case of a data packet of their own (B, C) within a predefinable time to all other computers respectively in the multicomputer system.

9. Multicomputer system according to Claim 8, in which each computer includes means of converting messages into data packets, which contain at least one of the following items of information:
a) user data (ND in fig. 9),
b) Data (W) to identify which path the data packet has taken through the multicomputer system,
c) Data (LS), which identifies the sending computer's local view of the system status in the preceding transmission round,
d) Data (LZ), from which the local time of the computer sending the data packet can be determined,
e) Data (RN) to identify the current transmission round,
f) Control data (K) for checking whether all or part of the data mentioned above has been correctly received.

10. One or more data carriers with, stored on them, a data processing program which, for reading into a multicomputer system with at least two computers, controls the method according to one of the claims 1 to 7.

## Revendications

1. Procédé pour l'échange de paquets de données (A, B, C dans la figure 2b) entre les ordinateurs d'un système multi-ordinateurs (MRS), les ordinateurs accomplissant les mêmes tâches en parallèle et indépendamment les unes des autres,
**caractérisé en ce**
**que** l'échange des paquets de données s'effectue sous la forme de tournées de transmission successives, les paquets de données étant amenés dans tous les ordinateurs selon une séquence homogène, lequel comprend les étapes suivantes :
a) un ordinateur quelconque (R1) envoie sur sa propre initiative un premier paquet de données (A) à tous les autres ordinateurs (R2, R3),
b) chacun des autres ordinateurs (R2, R3) réagit à la réception du premier paquet de données (A) dans un intervalle de temps pouvant être prédéfini avec l'envoi à chaque fois d'un paquet de données (B, C) propre respectivement à tous les autres ordinateurs dans le système multi-ordinateurs.

2. Procédé selon la revendication 1, avec lequel l'un des autres ordinateurs (R2, R3) ne réagit pas à la réception du premier paquet de données (A) dans une tournée de transmission s'il a lui-même déjà envoyé un paquet de données de sa propre initiative à tous les autres ordinateurs dans cette tournée de transmission.

3. Procédé selon la revendication 1 ou 2, avec lequel les paquets de données (DP dans la figure 9) contiennent au moins l'une des informations suivantes :
a) Données utiles (ND),
b) Données (W) destinées à identifier le trajet parcouru par le paquet de données à travers le système multi-ordinateurs,
c) Données (LS) qui identifient la vue locale de l'ordinateur émetteur de l'état du système dans la tournée de transmission précédente,
d) Données (LZ) à partir desquelles il est possible de déterminer l'heure locale de l'ordinateur ayant envoyé le paquet de données,
e) Données (RN) pour identifier la tournée de transmission actuelle,
f) Données de contrôle (K) destinées à vérifier si la totalité ou une partie des données mentionnées précédemment a été reçue correctement.

4. Procédé selon la revendication 3, avec lequel chaque ordinateur détermine à partir des vues locales (LSₖ) individuelles des ordinateurs de l'état du système une vue globale (GS) de l'état du système identique pour tous les ordinateurs.

5. Procédé selon la revendication 3, avec lequel une heure globale synchronisée est déterminée à l'aide des données (LZ) à partir desquelles peut être déterminée l'heure locale de l'ordinateur ayant envoyé le paquet de données.

6. Procédé selon l'une des revendications précédentes, avec lequel un paquet de données (A) envoyé par un ordinateur quelconque (R1 dans la figure 5) aux autres ordinateurs (R2, R3) est retransmis par ces autres ordinateurs de telle sorte que chacun des autres ordinateurs, en l'absence de défaut, reçoive ce paquet de données au moins deux fois.

7. Procédé selon l'une des revendications précédentes, avec lequel un ordinateur envoie de sa propre initiative un paquet de données à tous les autres ordinateurs du système multi-ordinateurs si une ou plusieurs des conditions suivantes sont remplies :
a) un programme d'application exécuté par l'ordinateur délivre une instruction d'émission ;
b) un intervalle de temps de déclenchement pouvant être prédéfini s'est écoulé depuis la dernière émission d'un paquet de données ;
c) le volume d'informations utiles prêtes à être transmises dans l'ordinateur dépasse une valeur pouvant être prédéfinie ;
d) le nombre d'informations à transmettre présentes dans l'ordinateur correspondant dépasse un nombre pouvant être prédéfini ;
e) il existe dans l'ordinateur une information à transmettre dont la valeur de priorité est supérieure à un seuil pouvant être prédéfini.

8. Système multi-ordinateurs comprenant au moins deux ordinateurs, lesquels comprennent des moyens pour échanger des paquets de données, les ordinateurs accomplissant les mêmes tâches en parallèle et indépendamment les unes des autres,
**caractérisé en ce**
**que** l'échange des paquets de données s'effectue sous la forme de tournées de transmission successives, les paquets de données étant amenés dans tous les ordinateurs selon une séquence homogène,
a) un ordinateur quelconque (R1) étant configuré de telle sorte à envoyer sur sa propre initiative un premier paquet de données (A) à tous les autres ordinateurs (R2, R3), et
b) chacun des autres ordinateurs (R2, R3) comprenant des moyens de déclenchement (ATVM, AM dans la figure 8) qui sont configurés de manière à déclencher l'envoi à chaque fois d'un paquet de données (B, C) propre respectivement à tous les autres ordinateurs dans le système multi-ordinateurs lors de la réception du premier paquet de données (A) dans un intervalle de temps pouvant être prédéfini.

9. Système multi-ordinateurs selon la revendication 8, avec lequel chaque ordinateur comprend des moyens pour convertir les informations en paquets de données qui contiennent au moins l'une des informations suivantes :
a) Données utiles (ND dans la figure 9),
b) Données (W) destinées à identifier le trajet parcouru par le paquet de données à travers le système multi-ordinateurs,
c) Données (LS) qui identifient la vue locale de l'ordinateur émetteur de l'état du système dans la tournée de transmission précédente,
d) Données (LZ) à partir desquelles il est possible de déterminer l'heure locale de l'ordinateur ayant envoyé le paquet de données,
e) Données (RN) pour identifier la tournée de transmission actuelle,
f) Données de contrôle (K) destinées à vérifier si la totalité ou une partie des données mentionnées précédemment a été reçue correctement.

10. Un ou plusieurs supports de données sur lequel est enregistré un programme de traitement de données qui, lorsqu'il est chargé dans un système multi-ordinateurs comprenant au moins deux ordinateurs, commande le procédé selon l'une des revendications 1 à 7.
